# FASCICULE DE BREVET EUROPEEN

(11) **EP 0 549 942 B1**
(45) Date de publication et mention de la délivrance du brevet: **27.12.1995**
(21) Numéro de dépôt: 92121234.6
(22) Date de dépôt: 14.12.1992
(51) Int. Cl.: H02G 15/103, H02G 15/105, H01R 4/64

(54) **Jonction de câbles électriques, ensemble prémonté de jonction et procédé de mise en oeuvre**
Verbindung von elektrischen Kabeln, vormontierter Verbindungszusammenbau und Herstellungsverfahren
Electrical cable junction, premounted junction assembly and manufacturing process

(30) Priorité: 17.12.1991 FR 9115666
(43) Date de publication de la demande: 07.07.1993
(73) Titulaire: EUROMOLD, B-1060 Bruxelles (BE)
(72) Inventeur: Cardinaels, Jozef, B-9080 Lochristi (BE); Brackeniers, Christophe, B-2930 Brasschaat (BE)
(74) Mandataire: Weinmiller, Jürgen

(56) Documents cités:
- EP-A- 0 234 161
- FR-A- 2 127 009
- FR-A- 2 446 023
- FR-A- 2 503 476
- FR-A- 2 592 825
- US-A- 2 399 899

## Description

La présente invention concerne les jonctions de câbles électriques moyenne ou haute tension, du type à protection rétractable les recouvrant. Elle porte sur une réalisation particulière d'une telle jonction, sur un ensemble prémonté de jonction, ainsi que sur le procédé de mise en oeuvre pour la mise en place de cet ensemble sur la jonction partiellement réalisée qui le reçoit.

Ces câbles électriques comportent une âme conductrice centrale, un isolant entourant l'âme, un écran équipotentiel semiconducteur autour dudit isolant, un écran métallique de masse sur le précédent et une gaine extérieure de protection recouvrant ledit écran métallique. Cet écran métallique peut être formé de feuilles de cuivre ou d'aluminium sur lesquelles est collée la gaine du câble ou peut être formé de fils de cuivre ou d'aluminium enroulés sur l'écran semiconducteur et recouverts par la gaine du câble.

Pour la jonction de deux câbles, les différentes couches constituant les câbles sont dénudées sur des longueurs différentes sur leurs extrémités à raccorder, pour avoir accès à chacune de ces couches, exception faite le cas échéant de l'écran métallique à feuilles collées sous la gaine du câble. Un réducteur est enfilé sur l'isolant dénudé de chaque câble. Ce réducteur incorpore un déflecteur terminal recouvrant l'extrémité de l'écran semiconducteur dénudé du câble correspondant. Un connecteur assure la connexion des âmes électriques des deux câbles. Un dissipateur de chaleur est en général associé au connecteur. Ce dissipateur est monté autour du connecteur et entre les deux réducteurs. Un corps de jonction recouvre le dissipateur et les deux réducteurs. Il ne recouvre que partiellement le déflecteur de chacun des deux réducteurs, les deux déflecteurs étant terminaux et saillants sur les deux bouts du corps de jonction.

Le document EP-A-0234161 montre une telle jonction. Dans cette jonction, un élément conducteur de continuité d'écran est monté sur le corps de jonction et relie les deux écrans métalliques des deux câbles. Un manchon rétractable et des capuchons terminaux associés au manchon recouvrent l'élément de continuité d'écran et les extrémités des gaines isolantes des deux câbles. Les capuchons terminaux recouvrent la liaison réalisée entre l'élément de continuité d'écran et les écrans métalliques de chacun des deux câbles.

Le document FR-A-2503 476 décrit différentes solutions pour la dépose d'un manchon mécanico-rétractable sur une jonction entre un câble et une borne électrique et sur l'élément de continuité d'écran de la jonction. L'une de ces solutions consiste à prédisposer ce manchon en extension sur un support tubulaire. Ce support est destructible, pour son retrait, par déroulement d'une bande hélicoïdale de découpe prévue initialement sur le support. Ce support portant le manchon en extension est enfilé sur la jonction réalisée, à l'emplacement de dépose du manchon. Cette dépose est obtenue en tirant sur l'extrémité dite tirette de la bande hélicoïdale et en la tournant autour de la jonction.

Cette opération de dépose du manchon est longue et délicate. Elle nécessite de veiller à ce que les bords de la bande hélicoïdale déroulée ne viennent pas endommager le manchon et/ou l'élément de continuité d'écran, surtout lorsque ce dernier est sous forme de pâte dense, comme indiqué dans ce document. En outre la présence d'éléments pâteux, tels que cet élément de continuité d'écran et d'éventuels joints d'étanchéité, fait obstacle au déroulement de la bande hélicoïdale, pour le retrait du support.

Le document FR-A-2 592 825 décrit une autre solution pour la dépose d'un manchon mécanico-rétractable sur une jonction. Cette solution consiste à utiliser un support tubulaire recouvert sur une partie de sa longueur d'un film de gainage, à faible coefficient de frottement.

Ce film est fixé à l'une des extrémités du support. Il reçoit sur lui le manchon en extension, ce manchon ne s'étendant pas au-delà du film de gainage. Ce support portant le manchon en extension est enfilé sur la jonction, à l'emplacement de dépose du manchon sur la jonction. Cette dépose est obtenue en tirant le support, saisi à la main par son extrémité non recouverte par le film et le manchon, jusqu'à son retrait total et le retrait total du film solidaire de l'autre extrémité du support.

Ce document décrit également qu'un ou des éléments auxiliaires, tels notamment qu'un composant pâteux d'étanchéité, peuvent être montés sous le manchon en extension, pour leur dépose simultanée à leur emplacement sur la jonction avec la dépose du manchon.

Il décrit en outre que le manchon peut être monté en extension sur deux supports analogues au support précité et disposés tête-bêche. La dépose du manchon se fait alors par retrait, l'un après l'autre, des deux supports jusqu'au retrait total de leur film de gainage du dessous du manchon.

Les solutions selon ce document sont satisfaisantes lorsque les manchons rétractables sont relativement courts. La dépose d'un manchon de grande longueur est par contre difficile sinon impossible, à cause de la friction importante du film de gainage avec le manchon sur le support.

En outre, les solutions connues par l'un et l'autre de ces deux documents conduisent à des temps relativement longs sur site, pour la réalisation d'une jonction entre deux câbles.

La présente invention a pour but d'éviter les inconvénients des solutions connues et de faciliter la réalisation d'une jonction entre deux câbles et de réduire la durée des opérations sur site.

Elle a pour objet une jonction de deux câbles électriques, chacun à âme conductrice centrale, isolant autour de l'âme, écran semiconducteur sur l'isolant, écran métallique sur l'écran semiconducteur et gaine extérieure de protection, tous dénudés sur des longueurs différentes, à l'exception possible dudit écran métallique relativement à ladite gaine, sur les extrémités à raccorder desdits câbles, comportant un connecteur central reliant les âmes des câbles, deux réducteurs montés de part et d'autre du connecteur sur l'isolant des câbles respectifs, un corps de jonction entourant lesdits réducteurs et ledit connecteur, un élément métallique tubulaire souple de continuité d'écran monté sur ledit corps de jonction et relié aux écrans desdits câbles, une tresse de mise à une masse extérieure reliée aux écrans de l'un des câbles, et une protection extérieure rétractable entourant ledit corps de jonction et l'élément de continuité d'écran qu'il porte, caractérisée en ce que ladite protection extérieure est une enveloppe débordant d'un côté et de l'autre sur les extrémités du corps de jonction et de l'élément de continuité d'écran et recouvrant directement les parties terminales des gaines desdits câbles, et en ce que l'un et l'autre desdits câbles sont équipés d'une prise d'écran, reliée aux écrans de chaque câble concerné et munie d'un moyen conducteur externe, en forme de tube rigide et extérieurement lisse, couplé et coaxial aux écrans du câble et largement saillant sur la périphérie de l'écran semi-conducteur dénudé, sur lequel sont pressées l'extrémité correspondante de l'élément de continuité d'écran et, pour l'une seule des deux prises d'écran, l'une des extrémités de la tresse de masse, par ladite protection extérieure.

Ladite jonction présente, en outre, au moins l'une des caractéristiques additionnelles suivantes :
- dans chacune desdites prises d'écran, ledit moyen externe est constitué par une plaque conductrice fermée sur elle-même, portant de préférence un coussin compressible sur sa face intérieure, ladite plaque étant reliée par une tresse conductrice de liaison à un moyen conducteur interne monté directement sur l'écran semi-conducteur et relié à l'écran métallique du câble et étant serrée sur ladite tresse de liaison.
- dans chacune des prise d'écran, le moyen conducteur externe est un tronçon de tube relié par une patte rigide conductrice de liaison à un moyen conducteur interne monté sur l'écran semi-conducteur et relié à l'écran métallique du câble.
- un anneau d'arrêt est bloqué sur l'un des réducteurs par la prise d'écran correspondante et reçoit intérieurement l'extrémité du corps de jonction qui s'y bloque.

L'invention a également pour objet un ensemble prémonté de jonction, caractérisé en ce qu'il comporte ledit corps de jonction, ledit élément tubulaire et ladite protection extérieure de ladite jonction et, en outre, deux supports tubulaires disposés sur les deux parties terminales respectives dudit corps de jonction, qu'ils prolongent de part et d'autre et sur lesquels s'étendent d'une part les parties terminales dudit élément tubulaire et d'autre part les parties terminales, en extension, de ladite protection extérieure rétractable, cette protection extérieure étant ainsi déjà en place définitive, avec l'élément tubulaire, sur ledit corps de jonction dans ledit ensemble prémonté.

L'invention a en outre pour objet un procédé de mise en oeuvre, pour la pose dudit ensemble et la réalisation de la jonction précitée à l'aide dudit ensemble prémonté, ce procédé consistant :
- à enfiler ledit ensemble prémonté sur l'extrémité de l'un des câbles, avant le raccordement de leurs âmes par ledit connecteur,
- à réaliser une jonction partielle par ledit connecteur et lesdits réducteurs montés en place relativement les uns aux autres sur les extrémités desdits câbles,

caractérisé en ce qu'il consiste,
- à monter les prises d'écran sur lesdits câbles,
- à positionner ledit anneau d'arrêt sur le réducteur monté sur l'autre câble et le bloquer en position par la prise d'écran adjacente sur cet autre câble,
- à faire glisser ledit ensemble sur la jonction partielle et sur ledit autre câble, jusqu'à ce qu'il se bloque par butée de l'extrémité correspondante dudit corps de jonction dans ledit anneau d'arrêt, et
- à dégager l'un et l'autre desdits supports dudit ensemble, du dessous de ladite protection rétractable puis du dessus de l'un et l'autre des câbles.

Avantageusement, ledit procédé consiste en outre à effectuer un marquage sur ledit autre câble, à une distance définie du plan de médian de jonction, de repérage de mise en position centrée dudit ensemble sur ladite jonction partielle.

Les caractéristiques et avantages de la présente invention ressortiront de la description faite ci-après d'un exemple de réalisation illustré dans les dessins ci-annexés. Dans ces dessins :
- la figure 1 est une vue en élévation, partiellement coupée d'une jonction, selon l'invention, de deux câbles électriques moyenne ou haute tension,
- la figure 2 est une vue partielle de la jonction de la figure 1, montrant certains de ses éléments dits prise d'écran pour l'un et anneau d'arrêt pour un autre,
- la figure 3 est une vue en développé de l'une des parties, dite plaque conductrice composite, de ladite prise d'écran précitée,
- les figures 4 et 5 sont deux vues de cette plaque, l'une de côté et l'autre en coupe et à échelle agrandie selon la ligne V-V de cette figure 3,
- la figure 6 est une vue de face de l'anneau d'arrêt de la jonction des figures 1 et 2,
- la figure 7 est une vue de côté de cet anneau d'arrêt,
- la figure 8 est une vue en coupe d'une variante de la prise d'écran de la figure 2,
- la figure 9 est une vue de côté, selon la flèche IX, de la prise d'écran de la figure 8.

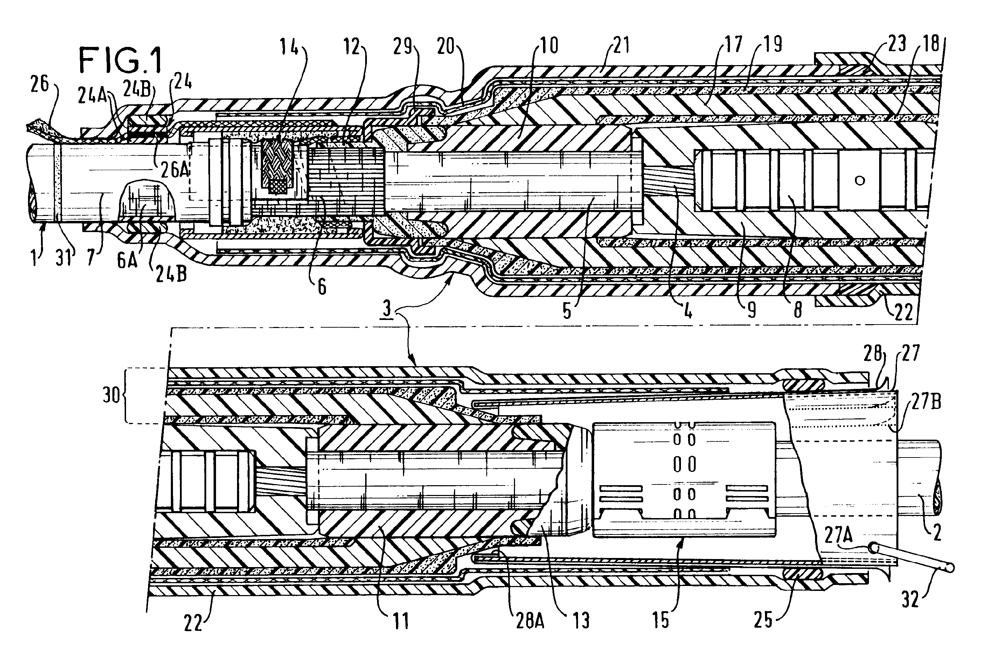

La figure 1 montre deux câbles électriques moyenne ou haute tension 1 et 2, raccordés l'un à l'autre par une jonction 3 selon la présente invention.

Chacun des câbles 1 et 2 comporte, comme noté sur le seul câble 1, une âme conductrice centrale 4, un isolant 5 autour de l'âme, un écran équipotentiel semiconducteur 6 sur l'isolant, et une gaine extérieure de protection 7. Chaque câble comporte en outre un écran métallique 6A entre son écran semiconducteur et sa gaine. Cet écran métallique 6A est dans l'exemple illustré formé de feuilles de cuivre ou d'aluminium sur lesquelles la gaine 7 est collée.

En variante, cet écran métallique peut être formé de fils conducteurs enroulés sur l'écran semiconducteur et recouverts par la gaine 7.

Ces différentes couches sont dénudées sur des longueurs différentes sur les extrémités à raccorder des câbles, à l'exception éventuelle de l'écran métallique lorsque celui-ci est collé sous la gaine.

La jonction 3 comporte un connecteur intérieur 8 reliant les âmes des câbles. Un dissipateur de chaleur 9 est associé au connecteur et monté autour de ce connecteur. La jonction comporte aussi deux réducteurs 10 et 11, qui ont été enfilés sur les extrémités des câbles avant le raccordement des âmes par le connecteur.

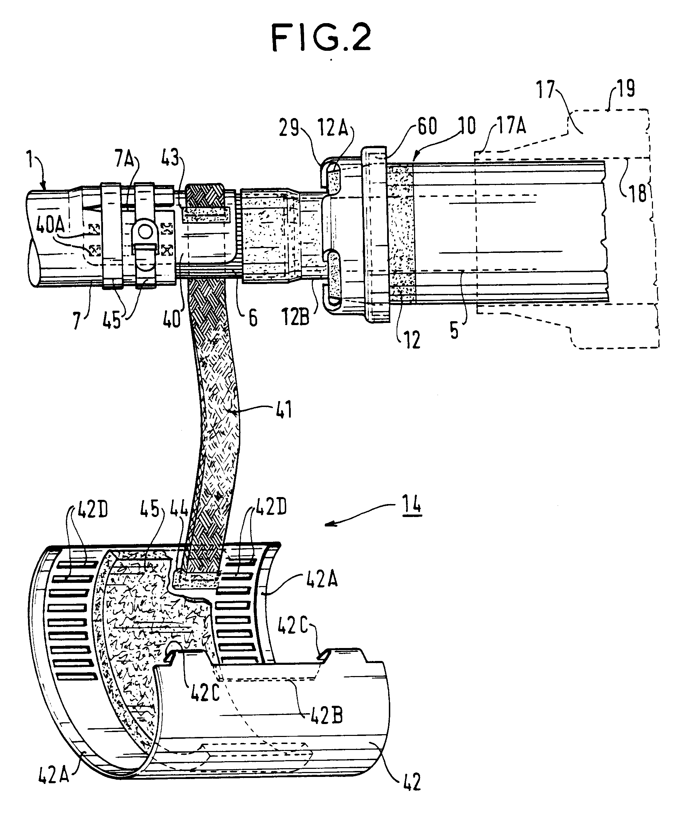

Ces deux réducteurs viennent de part et d'autre contre les extrémités du dissipateur. Chacun entoure l'isolant du câble. Chacun forme aussi un déflecteur intégré 12 ou 13, selon le réducteur considéré, qui entoure l'extrémité de l'écran semiconducteur 6 du câble concerné. Ces réducteurs sont en élastomère isolant. Leur partie terminale formant déflecteur est à base du même élastomère rendu conducteur. Un tel réducteur à déflecteur intégré constitue une pièce d'un seul tenant. Cette jonction 3 comporte, en outre, deux prises d'écran 14 et 15 montées de part et d'autre des déflecteurs terminaux des réducteurs 10 et 11, sur la portion dénudée de l'écran semiconducteur 6 de chaque câble. Ces prises d'écran 14 et 15 sont identiques l'une à l'autre. L'une d'elles est précisée et décrite en détail ci-après, en regard des figures 2 à 5.

La jonction 3 comporte également un corps de jonction 17 entourant le dissipateur de chaleur 9 et les deux réducteurs 10 et 11, mais laissant les déflecteurs terminaux 12 et 13 saillants sur ses deux bouts. Le corps de jonction est en élastomère; cet élastomère est rendu conducteur sur la face intérieure 18 et la face extérieure 19 du corps de jonction.

Dans la jonction 3, un élément tubulaire conducteur 20, souple et déformable, entoure le corps de jonction 17, les déflecteurs et les prises d'écran 14 et 15. Cet élément tubulaire est à conducteur tressé, du type tresse lâche. Une protection rétractable, formée dans l'exemple illustré par deux manchons rétractables 21 et 22, recouvre la jonction réalisée et assure la continuité de protection avec les gaines des câbles. Les deux extrémités des manchons se recouvrent l'une l'autre sur la partie médiane de la jonction et peuvent avoir un joint d'étanchéité 23 entre elles. Les deux autres extrémités des manchons recouvrent les gaines des câbles et ont également un joint d'étanchéité 24 ou 25 entre chacune d'elles et la gaine du câble concerné.

Ces deux manchons rétractables, ou le manchon unique équivalent résultant, assurent un fort serrage de l'élément tubulaire 20 sur le corps de jonction et sur les deux prises d'écran 14 et 15. Leurs extrémités sont également comprimées sur les gaines de protection des câbles, en enserrant les joints 24 et 25. Ces joints 24 et 25 et le joint 23 sont du type mastic.

La jonction 3 est en outre montrée équipée d'une tresse de masse 26. Cette tresse 26 est reliée, par exemple par pression du manchon, sur l'une des prises d'écran, ici à la prise d'écran 14. Elle sort par l'extrémité du manchon 21 pour être raccordée à une prise de masse extérieure. Pour une bonne étanchéité, à l'extrémité de la jonction 3 du côté de cette tresse de masse 26, cette tresse a une portion intérieure 26A rendue massive par de l'étain et le joint 24 précité est constitué d'un premier joint 24A enfilé sur la tresse et recouvrant sa partie étamée 26A et un deuxième joint 24B monté autour de la gaine du câble et de la tresse 26, au-dessus du joint 24A précité.

Dans la figure 1 à l'une des extrémités de la jonction, le manchon 21 est montré en position finale de serrage sur la jonction et sur la gaine de protection du câble 1. A l'opposé, le manchon 22 est par contre illustré toujours en extension sur un support tubulaire 27, juste avant sa dépose sur la jonction.

Ce support tubulaire est du type de celui décrit dans le FR-A-2592 825 précité. Il est montré recouvert sur la majeure partie de sa longueur d'un film de gainage 28, de faible coefficient de frottement. Ce film est solidaire en 28A de l'extrémité du support 27, qui est intérieure au manchon 22 qu'il porte en extension sur lui. Il recouvre la périphérie du support, en venant légèrement déborder sur le bout du manchon et en laissant non recouverte la deuxième extrémité du support, pour le retrait ultérieur de ce support. Les différences entre ce support et celui connu par le document cité sont précisées ci-après.

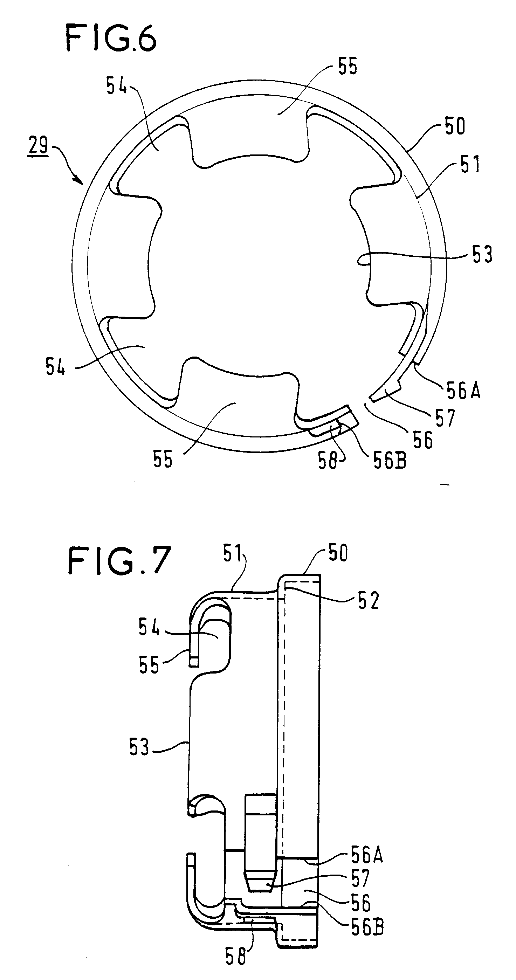

La jonction selon la présente invention comporte en outre un anneau d'arrêt 29, intérieur à la jonction. Cet anneau d'arrêt forme une bague autour de la partie tronconique épaulée du déflecteur de l'un des réducteurs, ici le déflecteur 12. L'une de ses extrémités est en butée contre cet épaulement. L'autre, du côté du connecteur 8, laisse un jeu entre elle et le déflecteur. Cet anneau d'arrêt sera décrit plus en détail ci-après en regard des figures 6 et 7.

En regard de cette jonction 3 réalisée entre les deux câbles, on précise immédiatement qu'une partie des éléments de cette jonction forme un ensemble initial, prémonté en usine. Cet ensemble est désigné sous la référence 30. Il est mis en place sur la jonction qui n'est en conséquence que partiellement réalisée sur site.

Cet ensemble 30 comporte le corps de jonction 17, deux supports, tels que le seul support 27 représenté, qui sont enfilés sur les bouts cylindro-coniques du corps de jonction, en le prolongeant de part et d'autre, l'élément tubulaire 20, les joints 24 et 25 disposés alors sur les deux supports, et les manchons 21 et 22 avec le joint 23 entre eux. Ces deux manchons viennent recouvrir tout l'ensemble à l'exception d'une extrémité de chaque support. Dans cet ensemble 30, les manchons 21 et 22 et l'élément tubulaire 20 sont en place définitive sur le corps de jonction, quand il est enfilé sur la jonction partielle réalisée sur site.

Le montage en place de cet ensemble est précisé. Il consiste à l'enfiler initialement sur l'extrémité de l'un des câbles, ici du câble 2 compte tenu de la présence de l'anneau d'arrêt 29 montré situé du côté du câble 1. Les âmes des câbles sont alors raccordées et le dissipateur monté en place sur le connecteur. Les prises d'écrans sont par ailleurs réalisées sur les écrans des câbles, elles bloquent les réducteurs contre le dissipateur. L'anneau d'arrêt 29 est mis en place entre la prise 14 et le déflecteur 12. L'ensemble 30 est alors glissé vers le câble 1 sur la jonction partielle réalisée, jusqu'à ce qu'il soit centré sur le connecteur 8.

L'arrêt en position centrée est mécaniquement obtenu par blocage du bout du corps de jonction, qui est intérieure au support, dans l'anneau d'arrêt 29, ce bout du corps de jonction venant s'enfiler dans le jeu laissé entre l'extrémité de l'anneau d'arrêt 29 et le déflecteur 12.

Avantageusement comme représenté, un repérage de mise de l'ensemble 30 en position centrée est donné par un marquage 31 réalisé préalablement sur le câble 1, à une distance définie du plan médian de jonction des câbles. Ce marquage correspond à la position d'arrêt à sa hauteur du support, qui est à l'opposé du support 27.

Le retrait des deux supports est alors réalisé l'un après l'autre, dès que l'ensemble 30 est en position centrée. A cet effet, ainsi que représenté sur le seul support 27 illustré, chacun des deux supports présente avantageusement deux trous 27A dans son extrémité non recouverte, pour l'insertion dans ces trous d'un outil ou poignée en U 32, d'aide au retrait du support. Il présente en outre sur sa longueur une bande linéaire prédécoupée 27B, pour l'ouverture du support et son élimination, après son dégagement total, avec le film, du dessous du manchon qu'il portait. Chacun des supports est, en outre, également adapté pour présenter des caractéristiques définies permettant son retrait du dessous d'une longueur importante de manchon en extension sur lui.

Pour ces raisons, chacun des supports, tels que le support 27, est de surface extérieure granulée ou rendue granulée et recouverte sur une partie de sa longueur du film lisse de gainage 28. Ce film de gainage est d'épaisseur de l'ordre de 10 à 100 microns. Il est enduit sur ses deux faces d'une pellicule anti-adhésive, à base de silicone. Il est par ailleurs replié en bout du support et a sa partie terminale 28A exempte d'une telle pellicule et collée à la face intérieure du support.

L'état granulé de surface extérieure de ces supports peut provenir d'un traitement de surface intérieure du moule dans lequel sont réalisés les supports ou d'un traitement des supports eux-mêmes s'ils sont initialement lisses. En particulier, dans ce dernier cas, on colle un film auxiliaire de surface granuleuse sur les supports lisses, puis on rapporte le film de gainage précité sur ce film auxiliaire.

Cet état granulé de surface du support et la présence du film de gainage enduit de pellicule siliconée, non plus sur sa seule face extérieure mais également sur sa face intérieure, permettent l'obtention d'un très faible coefficient de frottement du film de gainage sur le support, pour la dépose du manchon, même de grande longueur.

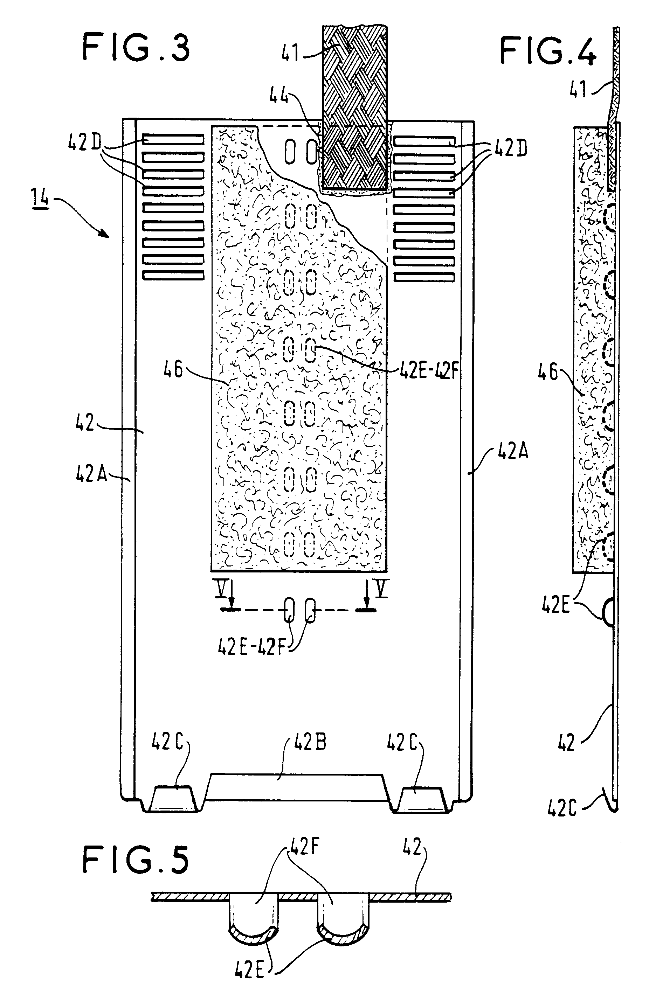

La figure 2 montre en détail avec les figures 3 à 5 la constitution de la prise d'écran 14. La prise d'écran 15 est identique à cette prise 14, elle est simplement sans l'anneau d'arrêt associé précité.

La prise d'écran 14 comporte essentiellement d'une part un moyen interne 40 de raccordement à l'écran métallique, une tresse conductrice 41 reliée à ce moyen interne et une plaque conductrice extérieure 42 de serrage. Deux soudures 43 et 44 assurent la liaison et la fixation des extrémités de la tresse au moyen interne 40 et à la plaque 42. Cette tresse de liaison 41 est prévue pour son enroulement possible sur quelques tours autour de l'écran 6 du câble 1 et du bout cylindrique du déflecteur 12, recouvrant l'extrémité de l'écran 6 pour la position de butée du réducteur 10 contre le dissipateur.

Le moyen interne 40 est constitué par une plaquette arquée, lorsque l'écran métallique 6A est collé sous la gaine de protection non accessible sur le bout de la gaine 7. Elle est partiellement enfilée sous l'extrémité de la gaine de protection 7 et de l'écran métallique. Cette extrémité de la gaine de protection est fendue à cet effet et présente une fente 7A facilitant l'insertion de la plaquette sous elle. La plaquette s'étend par ailleurs sur la portion dénudée de l'écran semiconducteur, avec la soudure 43 de son extrémité à ce niveau, sur la face extérieure de la plaquette.

La plaquette étant en place, elle vient sensiblement en butée contre le bout du déflecteur 12. La gaine de protection 7 est alors resserrée et frettée à l'aide de deux feuillards de blocage 45, en commençant par celui situé du côté du câble 1.

Cette plaquette présente avantageusement, sur sa partie enfilée sous la gaine 7, des perforations 40A réalisées par crevage et laissant des pics saillants sur sa face extérieure contre la gaine 7. Ces pics permettent un bon accrochage, sans glissement, de la plaquette sous la gaine après frettage.

La tresse 41 est enroulée, sur toute sa longueur, autour de l'écran 6 et de l'extrémité cylindrique du déflecteur 12. La plaque 42 est alors posée sur la tresse enroulée de manière à l'envelopper complètement en la serrant.

En variante non illustrée, lorsque l'écran métallique est constitué de fils conducteurs alors accessibles sur le bout de la gaine de protection 7, le moyen interne précité est constitué par un raccord recevant les extrémités des fils de l'écran métallique et l'extrémité de la tresse de liaison. Ce raccord s'étend sensiblement depuis le bout de la gaine 7 jusqu'à la partie épaulée 12A du déflecteur. La tresse de liaison est alors plus courte que précédemment et non enroulée mais à plat et serrée par la plaque contre le raccord.

La plaque est de préférence en cuivre étamé. Elle est arquée, pour des facilités de pose. Ses dimensions initiales à plat sont suffisantes pour venir, en largeur, recouvrir l'extrémité de la gaine 7 en étant à l'opposé en butée contre l'épaulement 12A défini sur le déflecteur, entre son extrémité cylindrique et sa partie tronconique intermédiaire, et pour venir, en longueur, s'enrouler et se fermer autour du câble, en enserrant le moyen interne précité 40 et la tresse de liaison 41.

La plaque 42 est avantageusement équipée pour venir directement se fermer en long et avec serrage autour du câble, ainsi que décrit en se référant à l'ensemble des figures 2 à 5.

Afin d'éliminer des coins vifs et assurer un renforcement contre des déformations, les deux bords longitudinaux 42A de la plaque 42 sont repliés sur sa face intérieure. Elle a également l'un de ses deux petits bords, 42B, replié sur sa face intérieure. Ce petit bord plié est découpé et partiellement déplié au voisinage de ses extrémités, pour définir deux crochets terminaux 42C, ouverts sur sa face intérieure. A ces deux crochets correspondent deux séries identiques d'ouvertures oblongues 42D dans la plaque, le long de ses bords longitudinaux. Ces ouvertures sont parallèles aux petits bords de la plaque. Ces deux séries d'ouvertures s'étendent sur une partie de la longueur de la plaque, sensiblement depuis son petit bord sans les crochets 42C. Les deux crochets 42C, engagés dans deux des ouvertures 42D de ces deux séries, permettent la fermeture et un fort serrage de la plaque 42 autour du câble, quel que soit le diamètre de ce dernier.

Pour renforcer ce serrage et le maintenir, un coussin compressible 46, métallique ou non et à fort coefficient de frottement sur la tresse de liaison et sur le câble, est associé à la plaque 42. Ce coussin est fixé sur la face intérieure de la plaque. Il s'étend, depuis le petit bord sans crochets de la plaque entre les deux séries d'ouvertures 42D qu'il ne recouvre pas, sans aller jusqu'au petit bord 42B à crochets 42C. Il lui correspond des rangées de découpes 42F dans la partie médiane de la plaque. Ces découpes sont parallèles aux bords longitudinaux de la plaque. Leur découpage est incomplet et laisse des débouchures 42E, restant solidaires des deux extrémités des découpes. Ces débouchures sont saillantes sur la face intérieure de la plaque. Elles ont une forme arquée et définissent des bossages très marqués sur cette face intérieure, pour ancrer la plaque avec une très forte compression du coussin entre ces bossages et l'extrémité de la gaine 7 du câble.

Pour la seule prise d'écran 14, la plaque 42 ainsi fermée est légèrement repoussée vers le câble 1 pour la mise en place de l'anneau d'arrêt 29, entre elle et l'épaulement du déflecteur 12. On note que le coussin 46 intérieur s'oppose au glissement précité de la plaque, nécessaire pour la mise en place de l'anneau. Il ne permet un tel glissement que sur une distance juste suffisante, de quelques millimètres, pour l'insertion en place de l'anneau d'arrêt 29, ce coussin 46 venant buter contre le bout de la gaine 7 en plus de l'obstacle par frottement qu'il constitue lui-même.

Cet anneau d'arrêt 29 est quant à lui décrit en détail en se référant plus particulièrement aux figures 6 et 7, son montage se comprenant en regard de la figure 2.

Cet anneau d'arrêt constitue une bague fendue, en forme globale de coupelle quand la bague est en place et fermée autour du déflecteur 12. Il est à partie avant 50 cylindrique et à base 51 globalement cylindrique et sur laquelle la partie avant définit un épaulement 52.

La base 51 est à fond présentant une ouverture circulaire 53, de diamètre légèrement supérieur à celui du déflecteur 12, dont le bord est segmenté par des échancrures 54. Ces échancrures 54 définissent entre elles des pattes 55. Les pattes constituent le fond de cette base et présentent des transitions arrondies avec le corps cylindrique de la base 51.

Cet anneau présente une fente 56 coupant sa partie avant 50 et sa base 51 et débouchant dans l'une des échancrures 54 qu'elle ouvre en conséquence. Il comporte un crochet d'encliquetage 57 sur l'un des bords 56A de la fente. Ce crochet d'encliquetage 57 est sur la base 51, juste sous l'épaulement entre elle et la partie avant. Il lui correspond un trou 58 dans la base, à proximité de l'autre bord 56B de la fente. Le crochet 57 saillant dans la fente 56 est à dent d'encliquetage non référencée tournée vers l'extérieur de l'anneau. Il est prévu pour ne définir aucune surépaisseur intérieure quand il est encliqueté dans le trou 58.

Cette fente 56 permet de venir positionner l'anneau sur le déflecteur 12 (figure 2), au niveau de la partie troconique épaulée de transition 12A du déflecteur, en l'ouvrant suffisamment en conséquence.

Les pattes 55 viennent ainsi en butée contre cette partie 12A du déflecteur et y sont bloquées par la plaque 42. La fermeture de l'anneau assure son blocage en place. L'anneau étant fermé, on note qu'il laisse entre sa partie avant et le déflecteur le jeu ou espace annulaire 60 dans lequel vient s'enfiler l'extrémité 17A du corps de jonction, ainsi qu'expliqué en regard de la figure 1 pour le positionnement centré de l'ensemble 30.

On précise en outre, qu'indépendamment de l'ensemble 30 prémonté en usine pour sa mise en place ultérieure sur site, les extrémités à raccorder des deux câbles sont également de préférence préparées et équipées en usine, avec les prises d'écran et les réducteurs en place sur ces extrémités. Chacune de ces extrémités ainsi équipée en usine est protégée et rendue étanche par un capuchon approprié.

Les câbles ainsi livrés sur site sur touret sont alors prêts pour leur raccordement rapide et aisé réalisé par l'ensemble 30.

La jonction selon l'invention permet ainsi de réduire de manière importante le nombre et la durée des opérations sur site et permet une amélioration substantielle de fiabilité.

En ce qui concerne la tresse de masse précitée 26 celle-ci peut être montée directement sur la prise d'écran 14 comme illustré dans la figure 1, soit en la soudant à l'intérieur de la plaque 42 de la prise d'écran concernée 14, soit en la fixant sur le bord de cette plaque, côté réducteur, à l'aide d'un crochet terminal soudé à cette tresse.

En variante non illustrée, cette tresse de masse est montée non plus sur la prise d'écran 14 mais sur l'ensemble 30. Dans cette variante une extrémité de la tresse de masse est bloquée contre l'élément tubulaire 20 par le manchon 21. Elle sort par ailleurs de l'ensemble 30 par l'extrémité du manchon 21 en extension sur son support. Elle est déposée en place dans la jonction et vient se raccorder à la prise d'écran 14 avec la dépose en place de l'extrémité en extension du manchon 21, par retrait du support qui portait ce manchon. L'étanchéité sur la gaine du câble, est assurée de manière comparable par le joint 24A qui entoure cette tresse de masse et le joint tel que 24B qui entoure alors le support avec la tresse contre lui et par la partie étamée et rendue imperméable de cette tresse de masse.

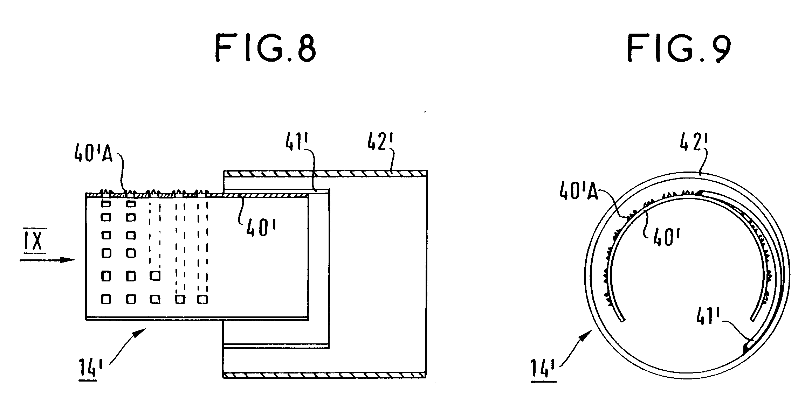

Les figures 8 et 9 montrent une variante de réalisation des prises d'écran 14 et 15 de la figure 1. Cette prise d'écran est désignée sous la référence 14′. Elle est décrite en précisant ses différences par rapport à la prise d'écran 14 de la figure 2 et en désignant ses éléments fonctionnellement analogues aux précédents par les mêmes références numériques accompagnées du signe "prime".

Son moyen conducteur externe 42′ est directement constitué par un tronçon de tube rigide, de préférence en cuivre étamé. Son diamètre est analogue à celui de la plaque analogue 42, considéré fermée avec serrage sur le câble, de la prise d'écran 14. Le moyen conducteur interne 40′ est une plaquette arquée et déformable, qui est partiellement saillante sur l'une des extrémités du tronçon de tube 42′. Cette partie saillante s'enfile sous l'écran métallique du câble et présente des moyens d'accrochage tels que des pics d'accrochage 40′. Le moyen conducteur de couplage 41′, entre ces moyens interne 40′ et externe 42′, est une patte arquée et rigide, de préférence en cuivre. Cette patte 41′ est intérieure au tronçon de tube 42′. L'une de ses extrémités est soudée intérieurement au tronçon de tube. Son extrémité opposée est soudée sur l'extérieur de la plaquette arquée 40′, sensiblement selon une ligne génératrice médiane de celle-ci.

Cette prise d'écran 14′ est de réalisation simplifiée, de mise en place plus rapide et de coût moindre, relativement à la prise d'écran 14. Elle s'enfile directement sur l'extrémité préparée de chacun des câbles, avant le raccordement de celle-ci. Elle reçoit l'extrémité arrière du réducteur, dans son tronçon de tube, quand ce réducteur est monté sur le câble. La rigidité de son tronçon de tube permet d'assurer un parfait blocage en place de l'anneau d'arrêt 29 (figures 1 et 2).

Dans une autre variante, non illustrée mais déduite directement des figures 8 et 9, la patte précitée 41′ n'est pas rapportée et soudée dans le tronçon de tube 42′, mais résulte d'une découpe incomplète réalisée dans ce tronçon de tube puis pliée intérieurement dans celui-ci. Elle est ensuite soudée comme précédemment sur l'extérieur de la plaquette 40′.

Dans cette dernière variante et celle des figures 8 et 9, le bord de la patte 41′, qui est à niveau avec l'extrémité du tronçon de tube, forme une butée contre le bout de la gaine du câble, lors de la mise en place de la prise d'écran. Avantageusement en outre, un ruban adhésif ou une bague préalablement enfilée sur le câble, recouvre l'extrémité, côté câble, du tronçon de tube, pour éviter toute aspérité vive à ce niveau et protéger le manchon rétractable contre toute agressivité due à une telle aspérité.

## Revendications

1. Jonction (3) de deux câbles électriques (1, 2), chacun à âme conductrice centrale (4), isolant (5) autour de l'âme (4), écran semiconducteur (6) sur l'isolant (5), écran métallique (6A) sur l'écran semiconducteur (6) et gaine extérieure de protection (7), tous dénudés sur des longueurs différentes, à l'exception possible dudit écran métallique (6A) relativement à ladite gaine (7), sur les extrémités à raccorder desdits câbles (1, 2), comportant un connecteur central (8) reliant les âmes (4) des câbles (1, 2), deux réducteurs (10, 11) montés de part et d'autre du connecteur (8) sur l'isolant (5) des câbles (1, 2) respectifs, un corps de jonction (17) entourant lesdits réducteurs (10, 11) et ledit connecteur (8), un élément métallique tubulaire souple (20) de continuité d'écran monté sur ledit corps de jonction (17) et relié aux écrans (10, 11) desdits câbles (1, 2), une tresse (26) de mise à une masse extérieure reliée aux écrans (10, 11) de l'un des câbles (1, 2), et une protection extérieure rétractable (21, 22) entourant ledit corps de jonction (17) et l'élément de continuité d'écran (20) qu'il porte, caractérisée en ce que ladite protection extérieure est une enveloppe (21, 22) débordant d'un côté et de l'autre sur les extrémités du corps de jonction (17) et de l'élément de continuité d'écran (20) et recouvrant directement les parties terminales des gaines (7) desdits câbles, et en ce que l'un et l'autre desdits câbles sont équipés d'une prise d'écran (14, 14′, 15), reliée aux écrans de chaque câble concerné et munie d'un moyen conducteur externe (42), en forme de tube rigide, et extérieurement lisse, couplé et coaxial aux écrans du câble et largement saillant sur la périphérie de l'écran semi-conducteur dénudé, sur lequel sont pressées l'extrémité correspondante de l'élément de continuité d'écran (20) et, pour l'une seule des deux prises d'écran, l'une des extrémités de la tresse de masse (26), par ladite protection extérieure (21, 22).

2. Jonction selon la revendication 1, dans laquelle chacune des prises d'écran (14, 14′) comporte un moyen conducteur interne (40) monté sur l'écran semi-conducteur (6) et relié à l'écran métallique (6A) du câble concerné, caractérisée en ce que chaque prise d'écran (14, 14′) comporte, en outre, un moyen conducteur intermédiaire de liaison (41, 41′) du moyen interne audit moyen externe.

3. Jonction selon la revendication 2, caractérisée en ce que ledit moyen de liaison (41) est une tresse de liaison fixée par ses extrémités auxdits moyens interne et externe et enroulée et serrée sur plusieurs tours sur ledit moyen interne (40), ainsi retenu sur l'écran semiconducteur.

4. Jonction selon l'une des revendications 1 à 3, caractérisée en ce que ledit moyen externe (42) est constitué par une plaque conductrice, sensiblement rectangulaire, montée et fermée sur elle-même sur le câble concerné, ayant l'une des ses dimensions, dite largeur, supérieure à la longueur de l'écran semiconducteur dénudé, pour recouvrir l'extrémité de la gaine du câble et l'extrémité du réducteur à déflecteur intégré monté sur le câble, et ayant l'autre de ses dimensions, dite longueur, supérieure à la périphérie de l'écran semiconducteur.

5. Jonction selon la revendication 4, caractérisée en ce que ladite plaque (42) comporte au moins une série d'ouvertures oblongues (42D) selon sa longueur, avec chaque série partant sensiblement d'un premier bord selon sa largeur et lesdites ouvertures parallèles audit premier bord, et comporte au moins un crochet (42C) sur un deuxième bord opposé au premier, reçu dans l'une des ouvertures de la série correspondante, pour la fermeture réglable et directe sur elle-même de ladite plaque.

6. Jonction selon la revendication 5, caractérisée en ce que ladite plaque (42) comporte deux séries d'ouvertures oblongues et deux crochets correspondants.

7. Jonction selon l'une des revendications 4 à 6, caractérisée en ce que chaque prise d'écran (14, 15) comporte, en outre, un coussin compressible (45) recouvrant partiellement la surface intérieure de ladite plaque (42)

8. Jonction selon la revendication 7, caractérisée en ce que ladite plaque (42) comporte une pluralité de bossages (42E) saillants sur sa face intérieure recouverte par ledit coussin.

9. Jonction selon la revendication 8, caractérisée en ce que lesdits bossages (42E) sont des débouchures correspondant à des découpes (42F) incomplètes dans ladite plaque.

10. Jonction selon la revendication 2, caractérisée en ce que ledit moyen conducteur externe (42′) est un tronçon de tube et ledit moyen conducteur intermédiaire (41′) une patte rigide de liaison dudit tronçon de tube audit moyen conducteur interne (40′).

11. Jonction selon la revendication 10, dans laquelle ledit moyen interne (40′) est une plaquette semi-rigide et arquée, adaptable sur la périphérie de l'écran semi-conducteur du câble et partiellement engageable sous l'écran métallique de ce câble, caractérisée en ce que ledit tronçon de tube (42′) est choisi de longueur supérieure à celle de l'écran semi-conducteur dénudé.

12. Jonction selon la revendication 11, caractérisée en ce que ladite patte de liaison (41′) a l'une de ses extrémités solidaire dudit tronçon de tube et a son extrémité opposée solidaire de ladite plaquette, sensiblement selon une génératrice dite médiane de cette plaquette en place sur le câble.

13. Jonction selon l'une des revendications 1 à 12, caractérisée en ce qu'elle comporte, en outre, un anneau dit d'arrêt (29) associé et monté sur l'un des deux réducteurs (10, 11), dans lequel est partiellement engagée l'une des extrémités correspondantes (17A) dudit corps de jonction (17).

14. Jonction selon la revendication 13, caractérisée en ce que ledit anneau d'arrêt (29) présente une forme de coupelle à partie avant (50) tournée vers ledit connecteur (8), ladite partie avant étant cylindrique et de diamètre supérieur au diamètre de son autre partie opposée dite base (51), ladite base étant ouverte et bloquée contre un épaulement (12A) sur le réducteur (10).

15. Jonction selon la revendication 14, caractérisée en ce qu'elle comporte des moyens de blocage dudit anneau d'arrêt (29) contre ledit épaulement du réducteur.

16. Jonction selon la revendication 15, caractérisée en ce que lesdits moyens de blocage sont constitués par celle (14) desdites prises d'écran (14, 15) sur l'écran dénudé (6) du câble correspondant (1), dont ledit moyen externe (42) est en butée contre ledit annneau d'arrêt.

17. Jonction selon la revendication 16, caractérisée en ce que ledit anneau d'arrêt (29) présente une fente (56) ouvrant ladite partie avant et ladite base, dont l'un des bords (56A) est équipé d'un crochet d'encliquetage (57) dans un trou correspondant (58) à proximité de l'autre bord (56B) de ladite fente.

18. Jonction selon la revendication 17, caractérisée en ce que ladite base (51) est à ouverture circulaire (53) dont le bord périphérique est segmenté par des échancrures (54) définissant entre elles des pattes (55) de retenue contre l'épaulement du réducteur (10), ladite fente (56) débouchant dans l'une desdites échancrures.

19. Ensemble prémonté de jonction, pour la réalisation d'une jonction selon l'une des revendications 1 à 18, caractérisé en ce qu'il comporte ledit corps de jonction (17), ledit élément tubulaire (20) et ladite protection extérieure (21, 22) de ladite jonction et, en outre, deux supports tubulaires (27) disposés sur les deux parties terminales respectives dudit corps de jonction, qu'ils prolongent de part et d'autre, et sur lesquels s'étendent d'une part les parties terminales dudit élément tubulaire (20) et d'autre part les parties terminales, en extension, de ladite protection extérieure (21, 22), cette protection extérieure étant ainsi déjà en place définitive, avec l'élément tubulaire, sur ledit corps de jonction dans ledit ensemble prémonté.

20. Ensemble selon la revendication 19, caractérisé en ce que chacune des deux extrémités (17A) du corps de jonction (17) est intérieure au support de ce côté, sans être accolée à la paroi intérieure dudit support (27).

21. Ensemble selon l'une des revendications 19 et 20, caractérise en ce que lesdits supports (27) ont une bande linéaire de prédécoupage (27B) sur leur longueur.

22. Ensemble selon la revendication 21, caractérisé en ce que les dits supports (27) ont des moyens (27A) d'accrochage d'un outil manuel d'extraction (32), sur leur partie terminale à l'opposé du corps de jonction.

23. Ensemble selon l'une des revendications 19 à 22, dans lequel chacun desdits supports (27) est recouvert extérieurement sur au moins une partie de sa longueur d'un film de gainage (28) de faible coefficient de frottement, replié et fixé intérieurement au support à l'une de ses extrémités (28A), caractérisé en ce que chaque support (27) est d'état de surface extérieure granuleux et en ce que ledit film de gainage (28) est enduit sur ses deux faces d'une pellicule anti-adhésive, sur la longueur de ladite surface granulée extérieure du support qu'il recouvre.

24. Ensemble selon l'une des revendications 19 à 23, caractérisé en ce que lesdits supports (27) sont de surface extérieure obtenue granuleuse directement de moulage, ou obtenue lisse de moulage et rendue granuleuse par un film auxiliaire granuleux rapporté sur chacun d'eux, avant ledit film de gainage (28).

25. Ensemble selon l'une des revendications 19 à 24, caractérisé en ce qu'il comporte, en outre, des anneaux de mastic d'étanchéité (25), disposés sensiblement en bout dudit élément tubulaire, sur lesdits supports (27), et recouverts par les parties terminales de ladite protection extérieure (21, 22) en extension sur lesdits supports.

26. Ensemble selon l'une des revendications 19 à 25, caractérisé en ce qu'il comporte en outre la tresse de masse, sortant dudit ensemble par l'une des extrémités de la protection, ayant une partie terminale intérieure audit ensemble, rendue partiellement massive et serrée contre ledit élément tubulaire (20) par ladite protection (21, 22), ladite tresse de masse restant par ailleurs libre extérieurement.

27. Procédé de mise en oeuvre, pour la réalisation d'une jonction selon l'une des revendications 13 à 18, à l'aide d'un ensemble prémonté conforme à l'une des revendications 19 à 26, consistant :
- à enfiler ledit ensemble prémonté (30) sur l'extrémité de l'un des câbles (2), avant le raccordement de leurs âmes par ledit connecteur (8),
- à réaliser une jonction partielle par ledit connecteur (8) et lesdits réducteurs (10, 11) montés en place relativement les uns aux autres sur les extrémités desdits câbles, caractérisé en ce qu'il consiste,
- à monter les prises d'écran sur lesdits câbles,
- à positionner ledit anneau d'arrêt (29) sur le réducteur monté sur l'autre câble et le bloquer en position par la prise d'écran adjacente (14) sur cet autre câble,
- à faire glisser ledit ensemble (30) sur la jonction partielle et sur ledit autre câble, jusqu'à ce qu'il se bloque par butée de l'extrémité correspondante dudit corps de jonction dans ledit anneau d'arrêt, et
- à dégager l'un et l'autre desdits supports (27) dudit ensemble, du dessous de ladite protection rétractable (21, 22) puis du dessus de l'un et l'autre des câbles (1, 2).

28. Procédé selon la revendication 27, caractérisé en ce qu'il consiste en outre à effectuer un marquage sur ledit autre câble, avant de faire glisser ledit ensemble (30) sur la jonction partielle et cet autre câble, pour traduire et assurer un répérage visuel de mise en position centrée dudit ensemble, ledit marquage étant à une distance définie du plan médian de jonction, sensiblement égale à la moitié de la longueur dudit ensemble (30).

29. Procédé selon l'une des revendications 27 et 28, caractérisé en ce que chacune des extrémités à raccorder desdits câbles est initialement préparée et équipée de l'une desdites prises d'écran (14, 15) et de l'un desdits réducteurs (10, 11) et est protégée et rendue étanche jusqu'à la réalisation ultérieure sur site de la jonction.

## Claims

1. Joint (3) between two electric cables (1, 2) each having a central conductive core (4), insulator (5) around the core (4), a semiconductor screen (6) over the insulator (5), a metal screen (6A) over the semiconductor screen (6) and an outer protective sheath (7), all with the possible exception of said metal screen (6A) stripped over different lengths relative to said sheath (7) at the ends of said cables (1, 2) to be connected, said joint including a central connector (8) connecting the cores (4) of the cables (1, 2), two reducers (10, 11) mounted on either side of the connector (8) over the insulator (5) of the respective cables (1, 2), a joint body (17) around said reducers (10, 11) and said connector (8), a flexible screen continuity tubular metal element (20) mounted on said joint body (17) and connected to the screens of said cables (1, 2), an external earth connection braid (26) connected to the screens of one of the cables (1, 2), and shrinkable external protection (21, 22) around said joint body (17) and the screen continuity element (20) that it carries, characterised in that said external protection is a sheath (21, 22) projecting at both ends from the joint body (17) and the screen continuity element (20) and covering directly the end parts of the sheaths (7) of said cables, and in that both said cables are equipped with a screen fixture (14, 14′, 15) connected to the screens of each cable concerned and provided with external conductor means (42) in the form of a rigid tube having a smooth outside, coupled to and coaxial with the screens of the cable and projecting a long way from the periphery of the bared semiconductor screen, onto which the corresponding end of the screen continuity element (20) and, in the case of one only of the two screen fixtures, one end of the earth braid (26), are pressed by said external protection (21, 22).

2. Joint according to claim 1 wherein each screen fixture (14, 14′) includes internal conductor means (40) mounted on the semiconductor screen (6) and connected to the metal screen (6A) of the cable concerned, characterised in that each screen fixture (14, 14′) further includes intermediate conductor means (41, 41′) for connecting the internal conductor means to said external conductor means.

3. Joint according to claim 2 characterised in that said connecting means (41) is a connecting braid with its end fixed to said internal and external conductor means and wound in several turns and clamped onto said internal conductor means (40), thus secured to the semiconductor screen.

4. Joint according to any one of claims 1 to 3 characterised in that said external conductor means (42) comprise a substantially rectangular conductive plate fitted and closed on itself to the cable concerned, having a width greater than the length of the bared semiconductor screen to cover the end of the cable sheath and the end of the integral deflector reducer mounted on the cable, and having a length greater than the perimeter of the semiconductor screen.

5. Joint according to claim 4 characterised in that said plate (42) includes at least one series of oblong openings (42D) along its length, each series starting substantially from a first widthwise edge, and said openings parallel to said first edge, and includes at least one hook (42C) on a second edge opposite the first edge and adapted to be received in one of the openings of the corresponding series for adjustable and direct closure of said plate on itself.

6. Joint according to claim 5 characterised in that said plate (42) includes two series of oblong openings and two hooks in corresponding relationship thereto.

7. Joint according to any one of claims 4 to 6 characterised in that each screen fixture (14, 15) further includes a compressible cushion (45) covering part of the interior surface of said plate (42).

8. Joint according to claim 7 characterised in that said plate (42) includes a plurality of bosses (42E) projecting from its interior face covered by said cushion.

9. Joint according to claim 8 characterised in that said bosses (42E) are punched-out upstands produced by incomplete cut-outs (42F) in said plate.

10. Joint according to claim 2 characterised in that said external conductor means (42′) comprise a section of tube and said intermediate conductor means (41′) comprise a rigid lug connecting said tube section to said internal conductor means (40′).

11. Joint according to claim 10 wherein said internal conductor means (40′) comprise a curved semi-rigid plate adapted to fit to the periphery of the semiconductor screen of the cable and partially engagable under the metal screen of the cable, characterised in that said tube section (42′) has a length greater than that of the bared semiconductor screen.

12. Joint according to claim 11 characterised in that said connecting lug (41′) has one end attached to said tube section and its opposite end attached to said plate, substantially along a median generatrix of said plate fitted to the cable.

13. Joint according to any one of claims 1 to 12 characterised in that it further includes a stop ring (29) associated with and mounted on one of the two reducers (10, 11) and in which is partially engaged one of the corresponding ends (17A) of said joint body (17).

14. Joint according to claim 13 characterised in that said stop ring (29) is cup-shaped with a front part (50) facing towards said connector (8), said front part being cylindrical and having a diameter greater than the diameter of its other or base part (51), said base part being open and immobilised against a shoulder (12A) on the reducer (10).

15. Joint according to claim 14 characterised in that it includes means for immobilising said stop ring (29) against said shoulder of the reducer.

16. Joint according to claim 15 characterised in that said immobilising means comprise the screen fixture (14) of said screen fixtures (14, 15) on the bared screen (6) of the corresponding cable (1) whose external conductor means (42) are abutted against said stop ring.

17. Joint according to claim 16 characterised in that said stop ring (29) has a slit (56) in said front part and said base part, one edge (56A) of which is provided with a hook (57) which clips into a corresponding hole (58) near the other edge (56B) of said slit.

18. Joint according to claim 17 characterised in that said base (51) has a circular opening (53) whose peripheral edge is segmented by notches (54) defining between them retaining lugs (55) adapted to abut against the shoulder of the reducer (10), said slit (56) leading into one of said notches.

19. Pre-assembled joint assembly for making a joint according to any one of claims 1 to 18 characterised in that it includes said joint body (17), said tubular element (20) and said external protection (21, 22) of said joint and, further, two tubular supports (27) disposed on respective end parts of said joint body, which they extend on either side, and over which extend end parts of said tubular element (20) and expanded end parts of said external protection (21, 22), said external protection being finally positioned with the tubular elements on said joint body in said pre-assembled assembly.

20. Assembly according to claim 19 characterised in that each of the two ends (17A) of the joint body (17) is inside the respective end of the support without being in contact with the inside wall of said support (27).

21. Assembly according to claim 19 or claim 20 characterised in that said supports (27) have a pre-cut linear strip (27B) along their length.

22. Assembly according to claim 21 characterised in that said supports (27) have means (27A) for connecting a manual extractor tool (32) at the end opposite the joint body.

23. Assembly according to any one of claims 19 to 22 wherein each of said supports (27) is covered on the outside over at least part of its length with a sheathing film (28) having a low coefficient of friction, folded around and fixed to the inside of the support at one end (28A), characterised in that each support (27) has a granular outside surface and in that said sheathing film (28) is coated on both sides with a non-stick film over the length of said granular external surface of the support that it covers.

24. Assembly according to any one of claims 19 to 23 characterised in that said supports (27) have a granular moulded outside surface or a smooth moulded outside surface rendered granular by attaching a granular auxiliary film to them before said sheathing film (28).

25. Assembly according to any one of claims 19 to 24 characterised in that it further includes mastic sealing rings (25) disposed substantially at the ends of said tubular element on said supports (27) and covered by end parts of said expanded external protection (21, 22) on said supports.

26. Assembly according to any one of claims 19 to 25 characterised in that it further includes the earth braid exiting said assembly from one end of the protection, having an end part inside said assembly rendered partially solid and clamped against said tubular element (20) by said protection (21, 22), said earth braid remaining free at the outside end.

27. Method for making a joint according to any one of claims 13 to 18 using a pre-assembled assembly according to any one of claims 19 to 26, consisting in:
- threading said pre-assembled assembly (30) over the end of one of the cables (2), before connecting their cores by said connector (8),
- making a partial joint with said connector (8) and said reducers (10, 11) mounted in their relative positions on the ends of said cables,
characterised in that it consists in:
- mounting the screen fixtures on said cables,
- positioning said stop ring (29) on the reducer mounted on the other cable and locking it in position with the adjacent screen fixture (14) on said other cable,
- threading said assembly (30) over the part-joint and over said other cable until it is immobilised by abutment of the corresponding end of said joint body in said stop ring, and
- removing both said supports (27) from said assembly, from under said shrinkable protection (21, 22) and then from over both the cables (1, 2).

28. Method according to claim 27 characterised in that it further consists in marking said other cable before threading said assembly (30) over the part-joint and said other cable to provide a visual indication of the centred position of said assembly, said marking being at a defined distance from the median plane of the joint substantially equal to half the length of said assembly (30).

29. Method according to claim 27 or claim 28 characterised in that each of the ends to be connected of said cables is initially prepared and equipped with one of said screen fixtures (14, 15) and one of said reducers (10, 11) and is protected and sealed until subsequent making of the joint on site.

## Patentansprüche

1. Verbindung (3) zwischen zwei Kabeln (1, 2), die je einen zentralen Leiter (4), eine Isolierung (5) um diesen zentralen Leiter (4), eine halbleitende Abschirmung (6) auf dieser Isolierung (5), eine metallische Abschirmung (6A) auf der halbleitenden Abschirmung (6) und eine äußere Schutzhülle (7) besitzen, die je an den Anschlußenden der Kabel (1, 2) über unterschiedliche Längen freigelegt werden, mit Ausnahme ggf. der metallischen Abschirmung (6A) bezüglich der Hülle (7), wobei die Verbindung einen zentralen Verbinder (8) zur Verbindung der Innenleiter (4) der Kabel (1, 2), zwei Reduzierglieder (10, 11), die zu beiden Seiten des Verbinders (8) auf der Isolierung (5) des jeweiligen Kabels (1, 2) montiert sind, einen Verbindungskörper (17), der die Reduzierglieder (10, 11) und den Verbinder (8) umgibt, ein rohrförmiges und biegsames Metallelement (20) für die Abschirmungskontinuität, das auf dem Verbindungskörper (17) montiert ist und an die Abschirmungen (10, 11) der beiden Kabel (1, 2) angeschlossen ist, eine Litze (26), die eine der Abschirmungen (10, 11) der Kabel (1, 2) an eine äußere Masse anschließt, und eine äußere dehnbare Schutzhülse (21, 22) aufweist, die den Verbindungskörper (17) und das darauf angeordnete, die Abschirmungskontinuität gewährleistende Element (20) umgibt, dadurch gekennzeichnet, daß die äußere Schutzhülse eine Umhüllung (21, 22) ist, die auf beiden Seiten über die Enden des Verbindungskörpers (17) und des die Kontinuität der Abschirmung gewährleistenden Elements (20) übersteht und unmittelbar die Endbereiche der Schutzhüllen (7) der Kabel bedeckt, und daß die beiden Kabel je einen Abschirmungsanschluß (14, 14′, 15) besitzen, der an die Abschirmungen des betreffenden Kabels angeschlossen ist und ein äußeres leitendes Mittel (42) in Form eines starren und außen glatten Rohrs aufweist, das koaxial zu den Kabelabschirmungen liegt und an diese gekoppelt ist sowie weit über den Umfang der freigelegten halbleitenden Abschirmung vorsteht, auf die das entsprechende Ende des die Kontinuität der Abschirmung gewährleistenden Elements (20) sowie bei nur einem der Abschirmungsanschlüsse eines der Enden der Masselitze (26) durch die äußere Schutzhülse (21, 22) aufgepreßt werden.

2. Verbindung nach Anspruch 1, bei der jeder Abschirmungsanschluß (14, 14′) ein inneres leitendes Mittel (40) aufweist, das auf die halbleitende Abschirmung (6) aufgebracht und an die metallische Abschirmung (6A) des betreffenden Kabels angeschlossen ist, dadurch gekennzeichnet, daß jeder Abschirmungsanschluß (14, 14′) außerdem ein leitendes Zwischenverbindungsmittel (41, 41′) zwischen dem inneren und dem äußeren leitenden Mittel aufweist.

3. Verbindung nach Anspruch 2, dadurch gekennzeichnet, daß das Verbindungsmittel (41) ein Verbindungsgeflecht ist, das mit seinren Enden an das innere und das äußere Mittel angeschlossen ist und in mehreren Windungen stramm um das innere Mittel (40) gewickelt ist, das so auf der halbleitenden Abschirmung gehalten wird.

4. Verbindung nach einem der Ansprüche 1 bis 3, dadurch gekennzeichnet, daß das äußere Mittel (42) aus einer leitenden, im wesentlichen rechteckigen Platte besteht, die auf dem entsprechenden Kabel montiert ist und dieses umschließt sowie eine größere Breite als die Länge der freigelegten halbleitenden Abschirmung besitzt, um das Ende der Hülle des Kabels und das Ende des Reduzierglieds mit integriertem Deflektor zu bedecken, das auf dem Kabel montiert ist, während die Länge der leitenden Platte größer als der Umfang der halbleitenden Abschirmung ist.

5. Verbindung nach Anspruch 4, dadurch gekennzeichnet, daß die Platte (42) mindestens eine Reihe von länglichen Öffnungen (42D) über die Länge besitzt, wobei jede Reihe im wesentlichen an einem ersten Rand in Breitenrichtung beginnt und die Öffnungen parallel zum ersten Rand verlaufen, und daß die Platte mindestens einen Haken (42C) am zweiten, entgegengesetzten Rand besitzt, der in eine der Öffnungen der entsprechenden Reihe beim Schließen der Platte eingreift, wobei das Schließen regelbar und unmittelbar auf der Platte erfolgt.

6. Verbindung nach Anspruch 5, dadurch gekennzeichnet, daß die Platte (42) zwei Reihen von länglichen Öffnungen und zwei entsprechende Haken besitzt.

7. Verbindung nach einem der Ansprüche 4 bis 6, dadurch gekennzeichnet, daß jeder Abschirmungsanschluß (14, 15) außerdem ein komprimierbares Kissen (45) aufweist, das teilweise die innere Oberfläche der Platte (42) bedeckt.

8. Verbindung nach Anspruch 7, dadurch gekennzeichnet, daß die Platte (42) mehrere Vorsprünge (42E) aufweist, die nach der durch das Kissen bedeckten Innenseite vorstehen.

9. Verbindung nach Anspruch 8, dadurch gekennzeichnet, daß die Vorsprünge (42E) Stanzvorsprünge sind, die unvollständigen Ausschnitten (42F) aus der Platte entsprechen.

10. Verbindung nach Anspruch 2, dadurch gekennzeichnet, daß das äußere leitende Mittel (42′) ein Rohrabschnitt ist, und daß das leitende Zwischenmittel (41′) eine starre Verbindungslasche zwischen dem Rohrabschnitt und dem inneren leitenden Mittel (40′) ist.

11. Verbindung nach Anspruch 10, bei der das innere leitende Mittel (40′) eine halbstarre und gewölbte Platte ist, die an den Umfang der halbleitenden Abschirmung des Kabels angepaßt werden kann und teilweise in die metallische Abschirmung des Kabels eingesteckt werden kann, dadurch gekennzeichnet, daß der Rohrabschnitt (42′) eine größere Länge als die freigelegte halbleitende Abschirmung besitzt.

12. Verbindung nach Anspruch 11, dadurch gekennzeichnet, daß die Verbindungslasche (41′) mit einem ihrer Enden am Rohrabschnitt und mit dem entgegengesetzten Ende an der Platte im wesentlichen entlang einer mittleren Mantellinie dieser Platte befestigt ist, wenn diese sich auf dem Kabel befindet.

13. Verbindung nach einem der Ansprüche 1 bis 12, dadurch gekennzeichnet, daß sie außerdem einen Haltering (29) aufweist, der auf einem der beiden Reduzierglieder (10, 11) montiert ist und in den teilweise eines der entsprechenden Enden (17A) des Verbindungskörpers (17) hineingesteckt ist.

14. Verbindung nach Anspruch 13, dadurch gekennzeichnet, daß der Haltering (29) eine Kuppelform aufweist und einen zum Verbinder (8) weisenden vorderen Bereich (50) zylindrischer Form und eines Durchmessers besitzt, der größer als der andere Ringbereich (51), Basis genannt, ist, wobei diese Basis offen ist und an einer Schulter (12A) des Reduzierglieds (10) blockiert ist.

15. Verbindung nach Anspruch 14, dadurch gekennzeichnet, daß sie Mittel aufweist, um den Haltering (29) an der Schulter des Reduzierglieds zu blockieren.

16. Verbindung nach Anspruch 15, dadurch gekennzeichnet, daß die Blockiermittel von dem Abschirmungsanschluß (14) auf der freigelegten Abschirmung (6) des entsprechenden Kabels (1) gebildet werden, dessen äußeres Mittel (42) am Haltering in Anschlag liegt.

17. Verbindung nach Anspruch 16, dadurch gekennzeichnet, daß der Haltering (29) einen Schlitz (56) im vorderen Bereich und in der Basis aufweist, dessen einer Rand (56A) einen Einrasthaken (57) zum Einrasten in ein entsprechendes Loch (58) in der Nähe des anderen Rands (56B) des Schlitzes trägt.

18. Verbindung nach Anspruch 17, dadurch gekennzeichnet, daß die Basis (51) eine kreisförmige Öffnung (53) aufweist, deren peripherer Rand durch Kerben (54) in Segmente geteilt ist, die an der Schulter des Reduzierglieds (10) anliegende Haltelaschen (55) definieren, wobei der Schlitz in eine dieser Kerben mündet.

19. Vormontierte Verbindungseinheit für die Herstellung einer Verbindung nach einem der Ansprüche 1 bis 18, dadurch gekennzeichnet, daß sie den Verbindungskörper (17), das rohrförmige Element (20) und die äußere Schutzhülse (21, 22) der Verbindung sowie außerdem zwei rohrförmige Träger (27) enthält, die auf den beiden Endbereichen des Verbindungskörpers sitzen und diesen zu beiden Seiten verlängern, wobei auf ihnen einerseits die Endbereiche des rohrförmigen Elements (20) und andererseits die gedehnten Endbereiche der äußeren Schutzülse (21, 22) liegen, und daß die äußere Schutzhülse bereits an ihrer endgültigen Stelle mit dem rohrförmigen Element auf dem Verbindungskörper in der vormontierten Einheit liegt.

20. Einheit nach Anspruch 19, dadurch gekennzeichnet, daß jedes der beiden Enden (17A) des Verbindungskörpers (17) an dieser Seite innerhalb des Trägers liegt, ohne an die Innenwand des Trägers (27) angeklebt zu sein.

21. Einheit nach einem der Ansprüche 19 und 20, dadurch gekennzeichnet, daß die Träger (27) ein vorgestanztes gerades Band (27B) über ihre Länge besitzen.

22. Einheit nach Anspruch 21, dadurch gekennzeichnet, daß die Träger (27) Mittel (27A) zum Ankoppeln eines Ziehwerkzeugs (32) in ihrem Endbereich entgegengesetzt zum Verbindungskörper aufweisen.

23. Einheit nach einem der Ansprüche 19 bis 22, in der jeder der Träger (27) außen über mindestens einen Teil seiner Länge von einem Hüllfilm (28) mit niedrigem Reibungskoeffizient bedeckt ist, der an einem der Enden (28A) umgebogen und innen am Träger befestigt ist, dadurch gekennzeichnet, daß jeder Träger (27) eine körnige äußere Oberfläche besitzt und daß der Hüllfilm (28) auf seinen beiden Seiten eine Antihaftschicht über die Länge der äußeren gekörnten Oberfläche des von ihm bedeckten Trägers aufweist.

24. Einheit nach einem der Ansprüche 19 bis 23, dadurch gekennzeichnet, daß die äußere Oberfläche der Träger (27) direkt bei der Herstellung durch Gießen körnig gemacht wird oder beim Gießen zuerst glatt ist und dann durch einen körnigen Hilfsfilm körnig gemacht wird, der auf jeden Träger vor dem Hüllfilm (28) aufgebracht wird.

25. Einheit nach einem der Ansprüche 19 bis 24, dadurch gekennzeichnet, daß sie außerdem Dichtungsringe aus Mastixbasis (25) enthält, die im wesentlichen am Ende des rohrförmigen Elements auf den Trägern (27) sitzen und durch Endbereiche der äußeren Schutzhülse (21, 22) bedeckt sind, die sich gedehnt auf den Trägern befindet.

26. Einheit nach einem der Ansprüche 19 bis 25, dadurch gekennzeichnet, daß sie außerdem eine Masselitze aufweist, die aus der Einheit an einem der Enden der Schutzhülse vorsteht, deren innerer Endbereich teilweise massiv gemacht wurde und durch die Schutzhülse (21, 22) gegen das rohrförmige Element (20) gedrückt wird, wobei die Masselitze im übrigen außen frei bleibt.

27. Verfahren zur Herstellung einer Verbindung nach einem der Ansprüche 13 bis 18 mit Hilfe einer vormontierten Einheit gemäß einem der Ansprüche 19 bis 26, das darin besteht:
- die vormontierte Einheit (30) auf das Ende eines der Kabel (2) vor dem Anschluß der Innenleiter über den Verbinder (8) aufzustecken,
- eine partielle Verbindung durch die Verbinder (8) und die Reduzierglieder (10, 11) herzustellen, die auf den Enden der Kabel relativ zueinander montiert sind,
dadurch gekennzeichnet, daß das Verfahren darin besteht,
- die Abschirmungsanschlüsse der Kabel zu montieren,
- den Haltering (29) auf dem Reduzierglied zu positionieren, das auf dem anderen Kabel montiert ist, und durch den benachbarten Abschirmungsanschluß (14) auf dem anderen Kabel in seiner Stellung zu blockieren,
- die Einheit (30) auf der partiellen Verbindung und auf dem anderen Kabel gleitend zu verschieben, bis sie durch Anschlag des entsprechenden Endes des Verbindungskörpers im Haltering blockiert wird,
- und die beiden Träger (27) aus der Einheit unter der dehnbaren Schutzhülse (21, 22) und oberhalb des jeweiligen Kabels (1, 2) herauszuziehen.

28. Verfahren nach Anspruch 27, dadurch gekennzeichnet, daß es weiter darin besteht, eine Markierung auf dem anderen Kabel anzubringen, ehe die Einheit (30) über die partielle Verbindung und das andere Kabel geschoben wird, um eine Augenscheinkontrolle der zentrierten Lage der Einheit zu gewährleisten, wobei diese Markierung in einem definierten Abstand von der Mittelebene der Verbindung erfolgt und dieser Abstand im wesentlichen der halben Länge der Einheit (30) gleicht.

29. Verfahren nach einem der Ansprüche 27 und 28, dadurch gekennzeichnet, daß jedes der anzuschließenden Kabelenden mit einem der Abschirmungsanschlüsse (14, 15) und einem der Reduzierglieder (10, 11) vorbereitet und versehen und anschließend geschützt und abgedichtet wird, bis die endgültige Herstellung der Verbindung vor Ort erfolgt.
